(19) Europäisches Patentamt
European Patent Office
Office européen des brevets

(11) **EP 4 632 987 A1**

(12) **EUROPEAN PATENT APPLICATION**

(43) Date of publication:
**15.10.2025 Bulletin 2025/42**

(21) Application number: **24197821.2**

(22) Date of filing: **02.09.2024**

(51) International Patent Classification (IPC):
*H02J 3/32* (2006.01)          *H02J 3/38* (2006.01)
*H02J 7/34* (2006.01)

(52) Cooperative Patent Classification (CPC):
**H02J 7/34; H02J 3/32; H02J 3/381;** H02J 2300/24;
Y02E 10/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2024 CN 202410426839**

(71) Applicants:
• **Wanbang Digital Energy Co., Ltd.
Changzhou, Jiangsu 213100 (CN)**
• **Jiangsu Wanbang Energy Storage
Technology Co., Ltd.
Yancheng Jiangsu (CN)**

(72) Inventors:
• **Chen, Shen
Changzhou, Jiangsu (CN)**

• **Guo, Shuaipo
Changzhou, Jiangsu (CN)**
• **Wang, Jisong
Changzhou, Jiangsu (CN)**
• **Yang, Yan
Changzhou, Jiangsu (CN)**
• **Fan, Deyu
Changzhou, Jiangsu (CN)**
• **Zhu, Xuancai
Changzhou, Jiangsu (CN)**
• **Huang, Xiang
Changzhou, Jiangsu (CN)**

(74) Representative: **Kurig, Thomas
Becker Kurig & Partner
Patentanwälte mbB
Bavariastraße 7
80336 München (DE)**

(54) **DEVICE AND METHOD FOR SMOOTHING AND CONTROLLING POWER FLUCTUATION OF PHOTOVOLTAIC ASSEMBLY AND PHOTOVOLTAIC ENERGY STORAGE SYSTEM**

(57)     The disclosure provides a device (20) and method for smoothing and controlling power fluctuation of a photovoltaic assembly (11) and a photovoltaic energy storage system. The device (20) includes an energy storage module (21), a bidirectional power converter (22), an acquisition module (23), and a control module (24). The energy storage module (21) is connected to a photovoltaic side of a photovoltaic inverter (12) and an output end of the photovoltaic assembly (11) through a point of common coupling. The bidirectional power converter (22) is disposed between the energy storage module (21) and the point of common coupling. The acquisition module (23) acquires first and second current feedback values. The control module (24) calculates a second current change rate and generates a control signal controlling a first current based on a dual regulator control algorithm when the second current change rate exceeds a second current change rate limit value.

FIG. 1

EP 4 632 987 A1

# EP 4 632 987 A1

## Description

### BACKGROUND

Technical Field

The disclosure relates to the technical field of power electronics and in particular, relates to a device for smoothing and controlling power fluctuation of a photovoltaic assembly, a method for smoothing and controlling power fluctuation of a photovoltaic assembly, and a photovoltaic energy storage system.

Description of Related Art

In conventional photovoltaic systems, photovoltaic assemblies are connected to the grid directly through photovoltaic inverters most of the time. Due to the volatility of photovoltaic power, the grid-connected power experiences power jumps, and sometimes drastic jumps occur. It thus can be seen that photovoltaic systems are unstable energy sources for grids, so how to suppress power fluctuation in photovoltaic power generation systems is worth studying.
Patent CN105552969B discloses a distributed photovoltaic power generation output power smoothing method based on power prediction. Patent CN105680474B discloses a control strategy for designing energy storage to suppress rapid power changes in photovoltaic power stations based on a model predictive control method. These methods are power control methods based on prediction models, and both belong to indirect regulation on the AC side. Although these methods can be used to achieve power smoothing and controlling, their algorithm implementation is complex, so these methods are less practical.

### SUMMARY

To solve the abovementioned technical problems, the disclosure provides a device and method for smoothing and controlling power fluctuation of a photovoltaic assembly and a photovoltaic energy storage system capable of transforming a photovoltaic system into an energy storage system in a simple and effective manner and achieving photovoltaic coupling between the photovoltaic assembly and the energy storage module, rapid regulation of fluctuation in total photovoltaic export power, as well as smoothing and controlling of photovoltaic power.
The technical solutions adopted by the disclosure are provided as follows.
The disclosure provides a device for smoothing and controlling power fluctuation of a photovoltaic assembly, and a point of common coupling is provided between an output end of the photovoltaic assembly and a photovoltaic inverter. The device includes an energy storage module, a bidirectional power converter, an acquisition module, and a control module. The energy storage module is connected to a photovoltaic side of the photovoltaic inverter and the output end of the photovoltaic assembly through the point of common coupling. The bidirectional power converter is disposed between the energy storage module and the point of common coupling. A first current and a photovoltaic current outputted by the photovoltaic assembly are merged into a second current at the photovoltaic side through the point of common coupling and flow to the photovoltaic inverter. The first current is the current outputted from the energy storage module and flowing out through the bidirectional power converter. The acquisition module is configured to acquire a first current feedback value of the first current and a second current feedback value of the second current. The control module is configured to calculate a second current change rate of the second current according to the second current feedback value and generate a control signal configured to control the first current according to the first current feedback value, the second current feedback value, and a second current change rate limit value based on a dual regulator control algorithm when the second current change rate exceeds the second current change rate limit value, so as to achieve smoothing and controlling of power fluctuation of the photovoltaic assembly.
In addition, the device for smoothing and controlling power fluctuation of the photovoltaic assembly according to the disclosure also has the following additional technical features.
According to an embodiment of the disclosure, the control module specifically includes a second current change rate calculation unit and a control signal generation unit. The second current change rate calculation unit is configured to calculate the second current change rate of the second current according to the second current feedback value. The control signal generation unit calculates a first current given value of the first current and generates the control signal configured to control the first current according to the first current feedback value, the second current change rate, and the second current change rate limit value based on the dual regulator control algorithm when the second current change rate exceeds the second current change rate limit value.
According to an embodiment of the disclosure, the control signal generation unit specifically includes an error calculator, a second regulator, and a first regulator. The error calculator is configured to calculate a second current correction change rate according to the second current change rate and the second current change rate limit value. The

2

second regulator is configured to calculate the first current given value according to the second current correction change rate. The first regulator is configured to generate the control signal according to the first current feedback value and the first current given value.

According to an embodiment of the disclosure, the second current change rate limit value includes a second current change rate upper limit and a second current change rate lower limit. When the second current change rate is greater than the second current change rate upper limit, the second current correction change rate calculated by the error calculator is equal to the second current change rate minus the second current change rate upper limit. When the second current change rate is lower than the second current change rate lower limit, the second current correction change rate calculated by the error calculator is equal to the second current change rate minus the second current change rate lower limit. The control signal generation unit further includes an adder. The first current given value is inputted to a positive input end of the adder and the first current feedback value is inputted to a negative input end of the adder for calculation. The first regulator generates the control signal according to a calculation result of the adder.

According to an embodiment of the disclosure, the device further includes a first current sensor and a second current sensor. The first current sensor is disposed between the bidirectional power converter and the point of common coupling and is configured to detect the first current feedback value of the first current. The second current sensor is disposed between the point of common coupling and the photovoltaic inverter and is configured to detect the second current feedback value of the second current.

In addition, to achieve the above, the disclosure further provides a method for smoothing and controlling power fluctuation of a photovoltaic assembly.

In the method for smoothing and controlling power fluctuation of the photovoltaic assembly, a point of common coupling is provided between an output end of the photovoltaic assembly and a photovoltaic inverter. An energy storage module is connected to a photovoltaic side of the photovoltaic inverter and the output end of the photovoltaic assembly through the point of common coupling. A bidirectional power converter is provided between the energy storage module and the point of common coupling. A first current and a photovoltaic current outputted by the photovoltaic assembly are merged into a second current at the photovoltaic side through the point of common coupling and flow to the photovoltaic inverter. The first current is the current outputted from the energy storage module and flowing out through the bidirectional power converter. The method includes the following steps. In S1, a first current feedback value of the first current and a second current feedback value of the second current are acquired, and a second current change rate of the second current is calculated according to the second current feedback value. In S2, a control signal is generated according to the first current feedback value, the second current feedback value, and a second current change rate limit value based on a dual regulator control algorithm when the second current change rate exceeds the second current change rate limit value. In S3, the first current is controlled according to the control signal to achieve smoothing and controlling of power fluctuation of the photovoltaic assembly.

In addition, the method for smoothing and controlling power fluctuation of the photovoltaic assembly according to the disclosure also has the following additional technical features.

According to an embodiment of the disclosure, the dual regulator control algorithm calculates a second current correction change rate according to the second current change rate and the second current change rate limit value, calculates a first current given value according to the second current correction change rate by adopting a second regulator, and generates the control signal according to the first current feedback value and the first current given value by adopting a first regulator.

According to an embodiment of the disclosure, the second current change rate limit value includes a second current change rate upper limit and a second current change rate lower limit. When the second current change rate is greater than the second current change rate upper limit, the second current correction change rate is equal to the second current change rate minus the second current change rate upper limit. When the second current change rate is lower than the second current change rate lower limit, the second current correction change rate is equal to the second current change rate minus the second current change rate lower limit. Step S2 specifically includes the following steps. The second current correction change rate is inputted to the first current given value calculated by the second regulator. The first current given value is inputted to a positive input end of an adder, the first current feedback value is inputted to a negative input end of the adder for calculation, and a calculation result of the adder is inputted to the control signal generated by first regulator.

According to an embodiment of the disclosure, a first current sensor is provided between the bidirectional power converter and the point of common coupling. The first current sensor is configured to detect a first current feedback value of the first current. A second current sensor is provided between the point of common coupling and the photovoltaic inverter. The second current sensor is configured to detect a second current feedback value of the second current.

In addition, to achieve the above, the disclosure further provides a photovoltaic energy storage system.

The photovoltaic energy storage system includes a photovoltaic assembly, a photovoltaic inverter, and the device for smoothing and controlling power fluctuation of the photovoltaic assembly according to the above.

Beneficial effects provided by the disclosure include the following.

In the device for smoothing and controlling power fluctuation of the photovoltaic assembly provided by the embodiments of the disclosure, by connecting the energy storage module to the photovoltaic side of the photovoltaic inverter and the output end of the photovoltaic assembly through the point of common coupling, the photovoltaic system can be simply and effectively transformed into an energy storage system, and photovoltaic coupling between the photovoltaic assembly and the energy storage module is achieved. By generating the control signal configured to control the first current according to the first current feedback value, the second current feedback value, and the second current change rate limit value based on the dual regulator control algorithm, rapid regulation of fluctuation in the total photovoltaic export power as well as smoothing and controlling of the photovoltaic power are achieved.

**BRIEF DESCRIPTION OF THE DRAWINGS**

FIG1 is a schematic block diagram of a photovoltaic energy storage system according to an embodiment of the disclosure.
FIG. 2 is a processing flow chart of a control module according to an embodiment of the disclosure.
FIG. 3 is a processing flow chart of the control module according to a specific embodiment of the disclosure.
FIG. 4 is a graph comparing between photovoltaic power before and after controlling of a first current by a device for smoothing and controlling power fluctuation of a photovoltaic assembly in a specific embodiment of the disclosure.
FIG. 5 is a flow chart of a method for smoothing and controlling power fluctuation of a photovoltaic assembly according to an embodiment of the disclosure.

Reference numerals in the drawings: 11: photovoltaic assembly, 12: photovoltaic inverter, 20: device for smoothing and controlling power fluctuation of a photovoltaic assembly, 21: energy storage module, 22: bidirectional power converter, 23: acquisition module, 231: first current acquisition unit, 232: second current acquisition unit, 24: control module, 241: second current change rate calculation unit, 242: control signal generation unit, 2421: error calculator, 2422: second regulator, 2423: first regulator, 2424: adder, 25: first current sensor, 26: second current sensor, 27: first switch, and 28: second switch.

**DESCRIPTION OF THE EMBODIMENTS**

Description will now be made in detail to clearly and completely present preferred embodiments of the disclosure, examples of which are illustrated in the accompanying drawings. Nevertheless, the disclosed embodiments are merely part of the embodiments of the disclosure, not all the embodiments. Based on the embodiments of the disclosure, all other embodiments obtained by a person having ordinary skill in the art without making any inventive effort fall within the scope that the disclosure seeks to protect.

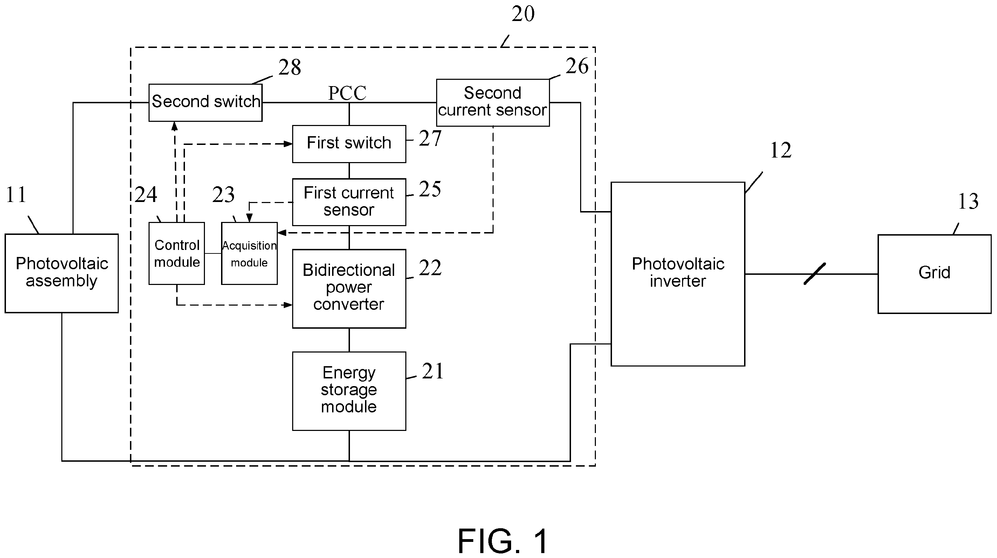

As shown in FIG. 1, in the embodiments of the disclosure, a point of common coupling PCC is provided between an output end of a photovoltaic assembly 11 and a photovoltaic inverter 12. A device for smoothing and controlling power fluctuation of a photovoltaic assembly 20 includes an energy storage module 21, a bidirectional power converter 22, an acquisition module 23, and a control module 24. The energy storage module 21 is connected to a photovoltaic side of the photovoltaic inverter 12 and the output end of the photovoltaic assembly 11 through the point of common coupling. The bidirectional power converter 22 is disposed between the energy storage module 21 and the point of common coupling. A first current and a photovoltaic current outputted by the photovoltaic assembly 11 are merged into a second current at the photovoltaic side through the point of common coupling, flow to the photovoltaic inverter 12, and then enters a grid 13. Herein, the first current is the current outputted from the energy storage module 21 and flowing out through the bidirectional power converter 22. The acquisition module 23 is configured to acquire a first current feedback value of the first current and a second current feedback value of the second current. The control module 24 is configured to calculate a second current change rate of the second current according to the second current feedback value and generate a control signal configured to control the first current according to the first current feedback value, the second current feedback value, and a second current change rate limit value based on a dual regulator control algorithm when the second current change rate exceeds the second current change rate limit value, so as to achieve smoothing and controlling of power fluctuation of the photovoltaic assembly 11.

It is easy to understand that the photovoltaic assembly may be a photovoltaic panel or other photovoltaic power generation units. The energy storage module may be an energy storage battery or other electrical energy storage device, which is not limited in this embodiment.

In a conventional photovoltaic system, by directly connecting the energy storage module 21 to the photovoltaic side rather than a DC bus side, photovoltaic coupling between the photovoltaic assembly 11 and the energy storage module 21 is achieved, so that the photovoltaic system is transformed into a photovoltaic energy storage system simply and effectively. The dramatic jumps in photovoltaic power are caused by large fluctuation in photovoltaic current most of the time. In the embodiments of the disclosure, by controlling the first current, large fluctuation in the current (i.e., the second current) inputted to the photovoltaic inverter 12 are avoided, so as to adjust the fluctuation in the total photovoltaic export power. The control module 24 adjusts the magnitude of the first current to suppress the fluctuation of the photovoltaic power only when the second current change rate exceeds the second current change rate limit value. The frequency of the energy storage module 21 participating in the regulation is low, which is beneficial to prolonging the device service life of the energy storage module 21 and reducing maintenance costs and energy loss.

In an embodiment of the disclosure, as shown in FIG. 1, the device for smoothing and controlling power fluctuation of the photovoltaic assembly 20 may further include a first current sensor 25 and a second current sensor 26. The first current sensor 25 is disposed between the bidirectional power converter and the point of common coupling and is configured to detect the first current feedback value of the first current. The second current sensor 26 is disposed between the point of common coupling and the photovoltaic inverter 12 and is configured to detect the second current feedback value of the second current. The acquisition module 23 may be connected to the first current sensor 25 and the second current sensor 26 via signal lines and acquire the first current feedback value detected by the first current sensor 25 and the second current feedback value detected by the second current sensor 26.

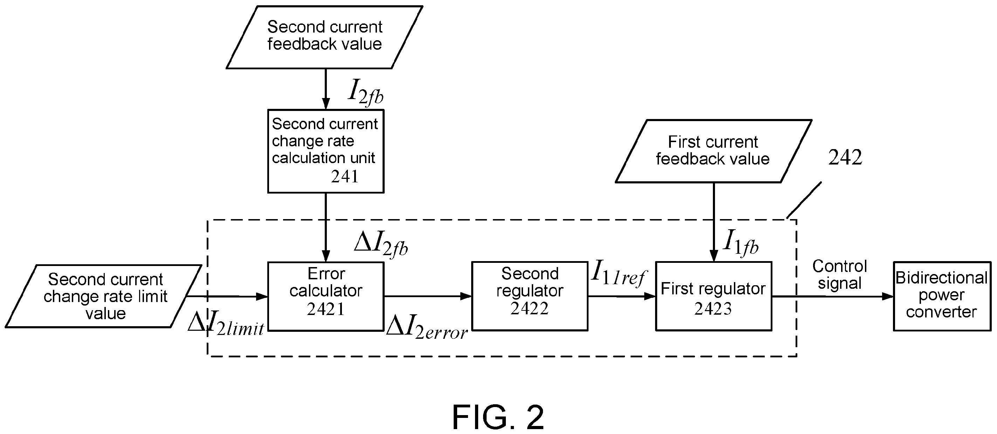

In an embodiment of the disclosure, as shown in FIG. 2, the control module 24 may specifically include a second current change rate calculation unit 241 and a control signal generation unit 242. The second current change rate calculation unit 241 is configured to calculate a second current change rate $\Delta I_{2fb}$ of the second current according to a second current feedback value $I_{2fb}$. The control signal generation unit 242 calculates a first current given value $I_{1ref}$ of the first current and generates the control signal configured to control the first current according to a first current feedback value $I_{1fb}$, the second current change rate $\Delta I_{2fb}$, and a second current change rate limit value $\Delta I_{2limit}$ based on the dual regulator control algorithm when the second current change rate $\Delta I_{2fb}$ exceeds the second current change rate limit value $\Delta I_{2limit}$.

In an embodiment of the disclosure, as shown in FIG. 2, the control signal generation unit 242 may specifically include an error calculator 2421, a second regulator 2422, and a first regulator 2423. The error calculator 2421 is configured to calculate a second current correction change rate $\Delta I_{2error}$ according to the second current change rate $\Delta I_{2fb}$ and the second current change rate limit value $\Delta I_{2limit}$. The second regulator 2422 is configured to calculate a first current given value $I_{1ref}$ according to the second current correction change rate $\Delta I_{2error}$. The first regulator 2423 is configured to generate the control signal according to the first current feedback value $I_{1fb}$ and the first current given value $I_{1ref}$.

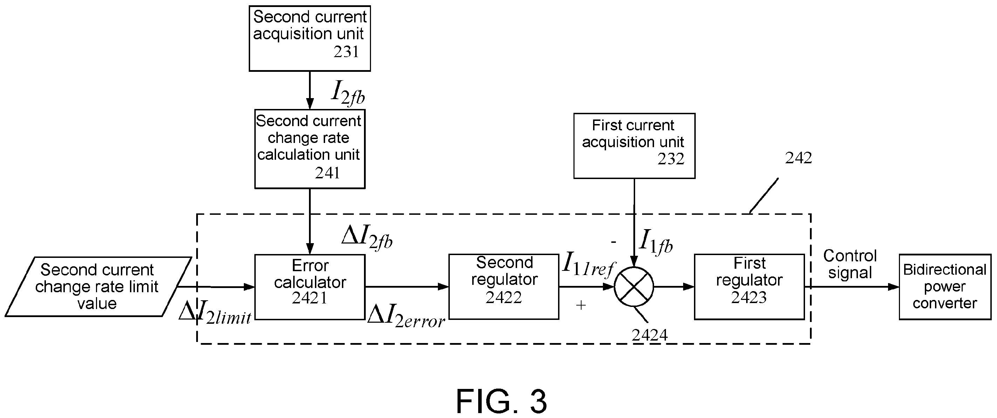

To be specific, the second current change rate limit value $\Delta I_{2limit}$ includes a second current change rate upper limit and a second current change rate lower limit. When the second current change rate $\Delta I_{2fb}$ is greater than the second current change rate upper limit, the second current correction change rate $\Delta I_{2error}$ calculated by the error calculator 2421 is equal to the second current change rate $\Delta I_{2fb}$ minus the second current change rate upper limit. When the second current change rate $\Delta I_{2fb}$ is lower than the second current change rate lower limit, the second current correction change rate $\Delta I_{2error}$ calculated by the error calculator 2421 is equal to the second current change rate $\Delta I_{2fb}$ minus the second current change rate lower limit. As shown in FIG. 3, the control signal generation unit 242 further includes an adder 2424. The first current given value $I_{1ref}$ is inputted to a positive input end of the adder 2424 and the first current feedback value $I_{1fb}$ is inputted to a negative input end of the adder 2424 for calculation. The first regulator 2423 generates the control signal according to a calculation result of the adder 2424.

It should be noted that in the disclosure, the dual regulator control algorithm adopted by the device for smoothing and controlling power fluctuation of the photovoltaic assembly does not involve complex mathematical operations (such as exponentiation, square root, etc.), has low requirements on the computing power of the microcontroller, and may be deployed in a general real-time processing chip, such as a digital signal processing (DSP) chip. Therefore, the costs are low and the practicality is high.

As shown in FIG. 3, in a specific embodiment of the disclosure, the acquisition module 23 includes a first current acquisition unit 232 and a second current acquisition unit 231. The first current acquisition unit 232 is configured to acquire the first current feedback value $I_{1fb}$, and the second current acquisition unit 231 is configured to acquire the second current feedback value $I_{2fb}$. The second current change rate calculation unit 241 calculates the second current change rate $\Delta I_{2fb}$ in real time according to the second current feedback value $I_{2fb}$ obtained by the second current acquisition unit 231 and generates the control signal configured to control the first current only when the second current change rate $\Delta I_{2fb}$ exceeds the second current change rate limit value $\Delta I_{2limit}$.

The second current change rate limit value $\Delta I_{2limit}$ includes a second current change rate upper limit $\Delta I_{2limit\_max}$ and a second current change rate lower limit $\Delta I_{2limit\_min}$, where the upper limit is a positive value and the lower limit is a negative value.

When $\Delta I_{2fb} > \Delta I_{2limit\_max}$, the second current correction change rate calculated by the error calculator 2421 is equal to the second current change rate minus the second current change rate upper limit (i.e., $\Delta I_{2error} = \Delta I_{2fb} - \Delta I_{2limit\_max}$).

When $\Delta I_{2fb} < \Delta I_{2limit\_min}$, the second current correction change rate calculated by the error calculator 2421 is equal to the second current change rate minus the second current change rate lower limit (i.e., $\Delta I_{2error} = \Delta I_{2fb} - \Delta I_{2limit\_min}$).

The error calculator 2421 outputs $\Delta I_{2error}$ to the second regulator 2422, and the second regulator 2422 calculates the first current given value $I_{1ref}$ according to $\Delta I_{2error}$.

An example of the operation processing performed by the second regulator 2422 is as follows:

$$I_{1ref} = K_p * \Delta I_{2error} + K_i * \int\limits_0^T (\Delta I_{2error} * dt)$$

where T represents the current time, $I_{1ref}$ is the first current given value, $\Delta I_{2error}$ is the second current correction change rate, and $K_p$ and $K_i$ are a proportional coefficient and an integral coefficient respectively. The performance of the second regulator 2422 may be adjusted by adjusting these two values.

The calculation processing herein is just an example. In actual deployment, other methods, such as the use of a proportional resonant regulator and the like, may also be used, but the principles are similar, that is, $\Delta I_{1ref}$ is obtained after a series of operations through the $\Delta I_{2error}$.

The first current given value $\Delta I_{1ref}$ is inputted to the positive input end of the adder 2424, and the first current feedback value $I_{1fb}$ acquired by the first current acquisition unit 232 is inputted to the negative input end of the adder 2424 for calculation. The adder 2424 is connected to the first regulator 2423 and generates the control signal through calculation performed by the first regulator 2423. The first current may be controlled by inputting the control signal into the bidirectional power converter.

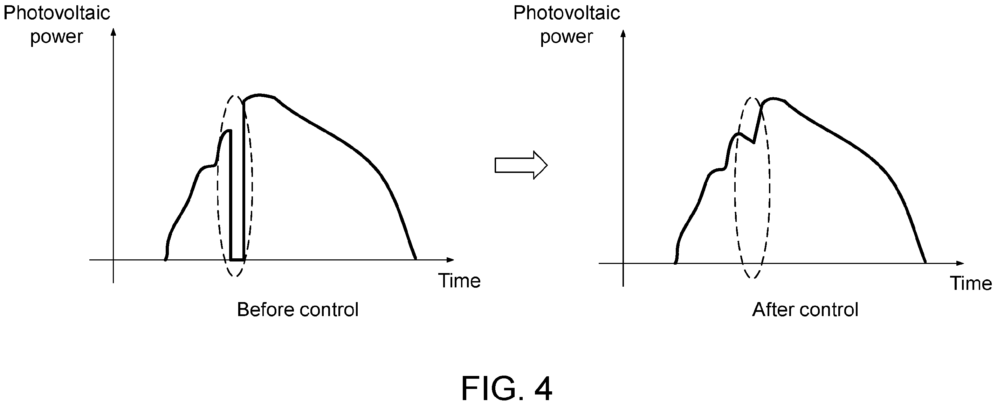

FIG. 4 illustrates a graph comparing between photovoltaic power before and after controlling of a first current by adopting a device for smoothing and controlling power fluctuation of a photovoltaic assembly in a specific embodiment of the disclosure. As shown in FIG. 4, on the left side, before the device for smoothing and controlling is used to control the first current, the photovoltaic power undergoes a sharp jump at the dotted circle, and on the right side, after controlling is performed, the sharp jump of the photovoltaic power is well suppressed. This shows that in the disclosure, when the device for smoothing and controlling power fluctuation of the photovoltaic assembly adopts the dual regulator algorithm to quickly adjust the first current outputted by the energy storage module to achieve rapid regulation of fluctuation in the total photovoltaic export power, and drastic jump in the photovoltaic power may be quickly suppressed, and smoothing and controlling of the photovoltaic power may be achieved.

As shown in FIG. 1, in a specific embodiment of the disclosure, a first switch 27 may also be provided between the first current sensor 25 and the point of common coupling PCC for switching the energy storage module 21, and a second switch 28 may also be provided between the photovoltaic assembly 11 and the point of common coupling PCC for switching the photovoltaic assembly 11.

In the device for smoothing and controlling power fluctuation of the photovoltaic assembly provided by the embodiments of the disclosure, by connecting the energy storage module to the photovoltaic side of the photovoltaic inverter and the output end of the photovoltaic assembly through the point of common coupling, the photovoltaic system may be simply and effectively transformed into an energy storage system, and photovoltaic coupling between the photovoltaic assembly and the energy storage module is achieved. By generating the control signal configured to control the first current according to the first current feedback value, the second current feedback value, and the second current change rate limit value based on the dual regulator control algorithm, rapid regulation of fluctuation in the total photovoltaic export power as well as smoothing and controlling of the photovoltaic power may be achieved.

Corresponding to the abovementioned device for smoothing and controlling power fluctuation of the photovoltaic assembly, the disclosure further provides a method for smoothing and controlling power fluctuation of a photovoltaic assembly.

As shown in FIG. 1, in the embodiments of the disclosure, the point of common coupling PCC is provided between the output end of the photovoltaic assembly 11 and the photovoltaic inverter 12. The energy storage module 21 is connected to the photovoltaic side of the photovoltaic inverter 12 and the output end of the photovoltaic assembly 11 through the point of common coupling PCC. The bidirectional power converter 12 is provided between the energy storage module 21 and the point of common coupling PCC. The first current and the photovoltaic current outputted by the photovoltaic assembly 11 are merged into the second current at the photovoltaic side through the point of common coupling PCC and flow to the photovoltaic inverter 12. Herein, the first current is the current outputted from the energy storage module 21 and flowing out through the bidirectional power converter 22.

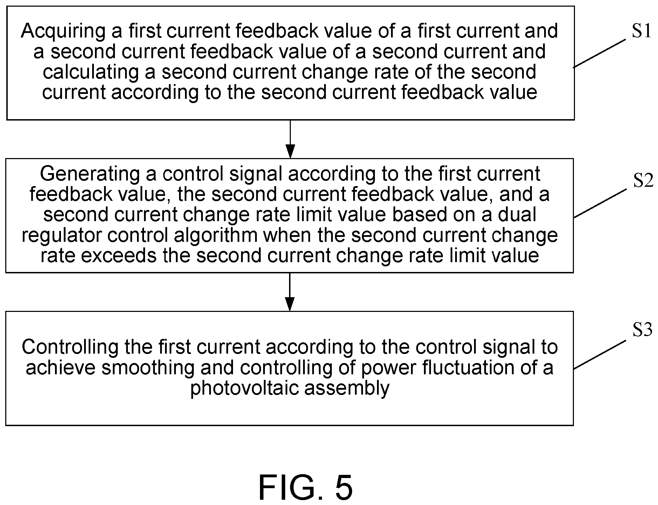

As shown in FIG. 5, in the embodiments of the disclosure, the method for smoothing and controlling power fluctuation of the photovoltaic assembly includes the following steps.

In S 1, a first current feedback value of a first current and a second current feedback value of a second current are acquired, and a second current change rate of the second current is calculated according to the second current feedback value.

As shown in FIG. 1, in an embodiment of the disclosure, the first current sensor 25 may be provided between the bidirectional power converter 22 and the point of common coupling PCC. The first current sensor 25 is configured to detect the first current feedback value of the first current. The second current sensor 26 may be provided between the point of common coupling PCC and the photovoltaic inverter 12. The second current sensor 26 is configured to detect the second current feedback value of the second current. In step S 1, the first current feedback value of the first current and the second current feedback value of the second current may be acquired respectively from the first current sensor 25 and the second current sensor 26.

In S2, a control signal is generated according to the first current feedback value, the second current feedback value, and a second current change rate limit value based on a dual regulator control algorithm when the second current change rate exceeds the second current change rate limit value.

To be specific, the dual regulator control algorithm may calculate a second current correction change rate according to the second current change rate and the second current change rate limit value, calculate a first current given value according to the second current correction change rate by adopting a second regulator, and generate the control signal according to the first current feedback value and the first current given value by adopting a first regulator.

In an embodiment of the disclosure, the second current change rate limit value includes a second current change rate upper limit and a second current change rate lower limit. Step S2 specifically includes the following steps.

In S21, when the second current change rate is greater than the second current change rate upper limit, the second current correction change rate is equal to the second current change rate minus the second current change rate upper limit.

In S22, when the second current change rate is lower than the second current change rate lower limit, the second current correction change rate is equal to the second current change rate minus the second current change rate lower limit.

In S23, the second current correction change rate is inputted to the first current given value calculated by the second regulator.

An example of the operation processing performed by the second regulator is as follows.

$$I_{1ref} = K_p * \Delta I_{2error} + K_i * \int_0^T (\Delta I_{2error} * dt)$$

,

where T represents the current time, $I_{1ref}$ is the first current given value, $\Delta I_{2error}$ is the second current correction change rate, and $K_p$ and $K_i$ are a proportional coefficient and an integral coefficient respectively. The performance of the second regulator may be adjusted by adjusting these two values.

The calculation processing herein is just an example. In actual deployment, other methods, such as the use of a proportional resonant regulator and the like, may also be used, but the principles are similar, that is, $I_{1ref}$ is obtained after a series of operations through the $\Delta I_{2error}$.

In S24, the first current given value is inputted to a positive input end of an adder, the first current feedback value is inputted to a negative input end of the adder for calculation, and a calculation result of the adder is inputted to the control signal generated by first regulator.

It should be noted that in the disclosure, the dual regulator control algorithm does not involve complex mathematical operations (such as exponentiation, square root, etc.), has low requirements on the computing power of the microcontroller, and may be deployed in a general real-time processing chip, such as a DSP chip. Therefore, the costs are low and the practicality is high.

In S3, the first current is controlled according to the control signal to achieve smoothing and controlling of power fluctuation of the photovoltaic assembly.

In the disclosure, according to the method for smoothing and controlling power fluctuation of the photovoltaic assembly, by generating the control signal configured to control the first current according to the first current feedback value, the second current feedback value, and the second current change rate limit value based on the dual regulator control algorithm, rapid regulation of fluctuation in the total photovoltaic export power as well as smoothing and controlling of the photovoltaic power may be achieved.

Corresponding to the abovementioned device for smoothing and controlling power fluctuation of the photovoltaic assembly, the disclosure further provides a photovoltaic energy storage system.

As shown in FIG. 1, in the embodiments of the disclosure, the photovoltaic energy storage system includes the photovoltaic assembly 11, the photovoltaic inverter 12, and the device for smoothing and controlling power fluctuation of the photovoltaic assembly 20 according to the above.

Since the technical effects of the abovementioned device for smoothing and controlling power fluctuation of the photovoltaic assembly may be referred to the content of the embodiments corresponding to the device for smoothing and controlling power fluctuation of the photovoltaic assembly and the photovoltaic energy storage system of the above embodiments includes the device for smoothing and controlling power fluctuation of the photovoltaic assembly described above, the photovoltaic energy storage system of the above embodiments also has the corresponding technical effects, so description thereof is not repeated herein.

In the description of the disclosure, "plurality" means two or more than two, unless otherwise expressly and specifically defined.

In the disclosure, unless clearly specified and defined otherwise, the terms "installed", "connected", "connecting", "fixed" and other terms should be understood in a broad sense, for instance, it can be a fixed connection, a detachable connection, or an integral connection, it can be a mechanical connection or an electrical connection, it can be a direct connection or an indirect connection through an intermediate medium, and it can be an internal communication between two components or an interaction relationship between two components.

The execution order of the steps shown in the flow chart is a preferred implementation mode and may also be adjusted according to the functions involved in each step in other embodiments of the disclosure, for example, the steps may be executed simultaneously or in a reverse order.

The logic and/or steps represented in a flow chart or otherwise described herein, for example, may be considered as an ordered list of executable instructions for implementing the logical functions, which may be embodied in any computer-readable medium for use by or together with, an instruction execution system, apparatus, or device. In the specification, the "computer-readable medium" may be any means that can contain, store, communicate, propagate, or transport the program for use by or together with an instruction execution system, device, or apparatus.

A person having ordinary skill in the art can understand that all or part of the steps carried out in the method of the above embodiments can be implemented by instructing related hardware through a program. The program can be stored in a computer-readable storage medium, and when the program is executed, it includes one of the steps of the method embodiments or a combination thereof.

In addition, in the embodiments of the disclosure, each functional unit may be integrated into one processing module, or each unit may exist alone physically, or two or more units may be integrated into one module. The integrated module may be implemented in the form of hardware or in the form of a software functional module. If the integrated module is implemented in the form of a software functional module and sold or used as an independent product, it may also be stored in a computer-readable storage medium.

## Claims

1. A device (20) for smoothing and controlling power fluctuation of a photovoltaic assembly (11), wherein a point of common coupling is provided between an output end of the photovoltaic assembly (11) and a photovoltaic inverter (12), and the device (20) comprises:

   an energy storage module (21) connected to a photovoltaic side of the photovoltaic inverter (12) and the output end of the photovoltaic assembly (11) through the point of common coupling;
   a bidirectional power converter (22) disposed between the energy storage module (21) and the point of common coupling, wherein a first current and a photovoltaic current outputted by the photovoltaic assembly (11) are merged into a second current at the photovoltaic side through the point of common coupling and flow to the photovoltaic inverter (12), and the first current is an current outputted from the energy storage module (21) and flowing out through the bidirectional power converter (22);
   an acquisition module (23) configured to acquire a first current feedback value of the first current and a second current feedback value of the second current; and
   a control module (24) configured to calculate a second current change rate of the second current according to the second current feedback value and generate a control signal configured to control the first current according to the first current feedback value, the second current feedback value, and a second current change rate limit value based on a dual regulator control algorithm when the second current change rate exceeds the second current change rate limit value, so as to achieve smoothing and controlling of power fluctuation of the photovoltaic assembly (11).

2. The device (20) for smoothing and controlling power fluctuation of the photovoltaic assembly (11) according to claim 1, wherein the control module (24) specifically comprises:

   a second current change rate calculation unit (241) configured to calculate the second current change rate of the second current according to the second current feedback value; and

a control signal generation unit (242) calculating a first current given value of the first current and generating the control signal configured to control the first current according to the first current feedback value, the second current change rate, and the second current change rate limit value based on the dual regulator control algorithm when the second current change rate exceeds the second current change rate limit value.

3. The device (20) for smoothing and controlling power fluctuation of the photovoltaic assembly (11) according to claim 2, wherein the control signal generation unit (242) specifically comprises:

an error calculator (2421) configured to calculate a second current correction change rate according to the second current change rate and the second current change rate limit value;
a second regulator (2422) configured to calculate the first current given value according to the second current correction change rate; and
a first regulator (2423) configured to generate the control signal according to the first current feedback value and the first current given value.

4. The device (20) for smoothing and controlling power fluctuation of the photovoltaic assembly (11) according to claim 3, wherein the second current change rate limit value comprises a second current change rate upper limit and a second current change rate lower limit,

when the second current change rate is greater than the second current change rate upper limit, the second current correction change rate calculated by the error calculator (2421) is equal to the second current change rate minus the second current change rate upper limit,
when the second current change rate is lower than the second current change rate lower limit, the second current correction change rate calculated by the error calculator (2421) is equal to the second current change rate minus the second current change rate lower limit,
the control signal generation unit (242) further comprises an adder (2424), the first current given value is inputted to a positive input end of the adder (2424) and the first current feedback value is inputted to a negative input end of the adder (2424) for calculation, and the first regulator (2423) generates the control signal according to a calculation result of the adder (2424).

5. The device (20) for smoothing and controlling power fluctuation of the photovoltaic assembly (11) according to claim 1, further comprising:

a first current sensor (25) disposed between the bidirectional power converter (22) and the point of common coupling and configured to detect the first current feedback value of the first current; and
a second current sensor (26) disposed between the point of common coupling and the photovoltaic inverter (12) and configured to detect the second current feedback value of the second current.

6. A method for smoothing and controlling power fluctuation of a photovoltaic assembly (11), wherein a point of common coupling is provided between an output end of the photovoltaic assembly (11) and a photovoltaic inverter (12), an energy storage module (21) is connected to a photovoltaic side of the photovoltaic inverter (12) and the output end of the photovoltaic assembly (11) through the point of common coupling, a bidirectional power converter (22) is provided between the energy storage module (21) and the point of common coupling, a first current and a photovoltaic current outputted by the photovoltaic assembly (11) are merged into a second current at the photovoltaic side through the point of common coupling and flow to the photovoltaic inverter (12), the first current is a current outputted from the energy storage module (21) and flowing out through the bidirectional power converter (22), and the method comprises following steps:

S1: acquiring a first current feedback value of the first current and a second current feedback value of the second current and calculating a second current change rate of the second current according to the second current feedback value;
S2: generating a control signal according to the first current feedback value, the second current feedback value, and a second current change rate limit value based on a dual regulator control algorithm when the second current change rate exceeds the second current change rate limit value; and
S3: controlling the first current according to the control signal to achieve smoothing and controlling of power fluctuation of the photovoltaic assembly (11).

7. The method for smoothing and controlling power fluctuation of the photovoltaic assembly (11) according to claim 6, wherein the dual regulator control algorithm calculates a second current correction change rate according to the second current change rate and the second current change rate limit value, calculates a first current given value according to the second current correction change rate by adopting a second regulator (2422), and generates the control signal according to the first current feedback value and the first current given value by adopting a first regulator (2423).

8. The method for smoothing and controlling power fluctuation of the photovoltaic assembly (11) according to claim 7, wherein the second current change rate limit value comprises a second current change rate upper limit and a second current change rate lower limit, wherein the step S2 comprises following steps:

when the second current change rate is greater than the second current change rate upper limit, the second current correction change rate is equal to the second current change rate minus the second current change rate upper limit,
when the second current change rate is lower than the second current change rate lower limit, the second current correction change rate is equal to the second current change rate minus the second current change rate lower limit, and
inputting the second current correction change rate to the first current given value calculated by the second regulator (2422); and
inputting the first current given value to a positive input end of an adder (2424), inputting the first current feedback value to a negative input end of the adder (2424) for calculation, and inputting a calculation result of the adder (2424) to the control signal generated by first regulator (2423).

9. The method for smoothing and controlling power fluctuation of the photovoltaic assembly (11) according to claim 6, wherein a first current sensor (25) is provided between the bidirectional power converter (22) and the point of common coupling, the first current sensor (25) is configured to detect a first current feedback value of the first current, a second current sensor (26) is provided between the point of common coupling and the photovoltaic inverter (12), and the second current sensor (26) is configured to detect a second current feedback value of the second current.

10. A photovoltaic energy storage system comprising a photovoltaic assembly (11), a photovoltaic inverter (12), and the device (20) for smoothing and controlling power fluctuation of the photovoltaic assembly (11) according to any one of claims 1 to 5.

FIG. 1

FIG. 2

FIG. 3

FIG. 4

EP 4 632 987 A1

Acquiring a first current feedback value of a first current and a second current feedback value of a second current and calculating a second current change rate of the second current according to the second current feedback value    S1

Generating a control signal according to the first current feedback value, the second current feedback value, and a second current change rate limit value based on a dual regulator control algorithm when the second current change rate exceeds the second current change rate limit value    S2

Controlling the first current according to the control signal to achieve smoothing and controlling of power fluctuation of a photovoltaic assembly    S3

FIG. 5

Europäisches
Patentamt

European
Patent Office

Office européen
des brevets

# EUROPEAN SEARCH REPORT

**Application Number**

EP 24 19 7821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/097616 A1 (CHEN AITANG [CN] ET AL) 21 March 2024 (2024-03-21) | 1,2,5-10 | INV.<br>H02J3/32 |
| A | * abstract *<br>* paragraphs [0057], [0076], [0077], [0134] *<br>* figures 4-11 *<br>* claims 1-13 * | 3,4 | H02J3/38<br>H02J7/34 |
| A | CN 114 512 996 A (WANWAN DIGITAL ENERGY SHARE LTD COMPANY) 17 May 2022 (2022-05-17)<br>* abstract *<br>* figures 1,2,5 *<br>* claims 1-10 * | 1,6 | |
| A | US 2016/233679 A1 (LI XIANGJUN [CN] ET AL) 11 August 2016 (2016-08-11)<br>* abstract *<br>* paragraphs [0043] - [0055], [0074] - [0076] *<br>* claims 1-3,10 *<br>* figures 1,2 * | 1,6 | |
| A | WO 01/33705 A1 (POWERSEARCH LTD [AU]; BORLE LAWRENCE JOSEPH [AU]) 10 May 2001 (2001-05-10)<br>* abstract *<br>* page 12, line 18 - page 13, line 5 *<br>* figure 20 *<br>* page 18, line 29 - page 19, line 30 * | 1-10 | |

**TECHNICAL FIELDS SEARCHED (IPC)**

H02J

The present search report has been drawn up for all claims

| Place of search | Date of completion of the search | Examiner |
|---|---|---|
| Munich | 6 March 2025 | Fiat, Cyrille |

EPO FORM 1503 03.82 (P04C01)

## ANNEX TO THE EUROPEAN SEARCH REPORT
## ON EUROPEAN PATENT APPLICATION NO.

EP 24 19 7821

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | | Publication date | Patent family member(s) | | Publication date |
|---|---|---|---|---|---|
| US 2024097616 | A1 | 21-03-2024 | CN 113489123 A | | 08-10-2021 |
| | | | EP 4340171 A1 | | 20-03-2024 |
| | | | US 2024097616 A1 | | 21-03-2024 |
| | | | WO 2022253189 A1 | | 08-12-2022 |
| CN 114512996 | A | 17-05-2022 | NONE | | |
| US 2016233679 | A1 | 11-08-2016 | US 2016233679 A1 | | 11-08-2016 |
| | | | WO 2015054878 A1 | | 23-04-2015 |
| WO 0133705 | A1 | 10-05-2001 | AU 1119101 A | | 14-05-2001 |
| | | | WO 0133705 A1 | | 10-05-2001 |

EPO FORM P0459

For more details about this annex : see Official Journal of the European Patent Office, No. 12/82

**EP 4 632 987 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105552969 B

- CN 105680474 B